# EUROPEAN PATENT APPLICATION

(11) **EP 4 610 898 A1**
(43) Date of publication of application: **03.09.2025**
(21) Application number: 23887865.6
(22) Date of filing: 31.10.2023
(51) Int. Cl.: G06N 20/00

(54) **ALGORITHM MANAGEMENT METHOD AND APPARATUS**

(30) Priority: 10.11.2022 CN 202211406336; 29.12.2022 CN 202211711157
(71) Applicant: Huawei Technologies Co., Ltd., Shenzhen, Guangdong 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN)
(74) Representative: Körber, Martin Hans
(86) International application number: PCT/CN2023/128368
(87) International publication number: WO 2024/099175

(57) **Abstract**

This application relates to an algorithm management method and an apparatus. A first device obtains energy consumption comparison information of a first algorithm and a second algorithm, and sends first information to a second device based on the energy consumption comparison information, where the first information is used by the second device to perform algorithm management on the first device.

## Description

This application claims priority to Chinese Patent Application No. 202211711157.6, filed with the China National Intellectual Property Administration on December 29, 2022 and entitled "ALGORITHM MANAGEMENT METHOD AND APPARATUS ", which is incorporated herein by reference in its entirety.

This application claims priority to Chinese Patent Application No. 202211406336.9, filed with the China National Intellectual Property Administration on November 10, 2022 and entitled "DEVICE MONITORING MANAGEMENT METHOD AND APPARATUS", which is incorporated herein by reference in its entirety.

### TECHNICAL FIELD

Embodiments of the present invention relate to the field of communication technologies, and in particular, to an algorithm management method and an apparatus.

### BACKGROUND

Introducing an artificial intelligence (AI)/machine learning (ML) technology into a wireless communication system is a research hotspot in recent years. AI/ML performance monitoring is an important research direction, that is, monitoring performance of an AI/ML algorithm. An AI/ML performance monitoring result may be used for algorithm management such as lifecycle management (lifecycle management, LCM).

### SUMMARY

This application provides an algorithm management method and an apparatus, to perform algorithm management based on energy consumption.

According to a first aspect, an algorithm management method applied to a first device is provided, and includes: obtaining energy consumption comparison information of a first algorithm and a second algorithm; and sending first information to a second device based on the energy consumption comparison information.

The first information is used by the second device to perform algorithm management on the first device.

The first information may include the energy consumption comparison information, and may further include one or more of the following: a use case indication, an algorithm indication, or a communication system configuration indication.

The first information may be used by the second device to perform algorithm lifecycle management (lifecycle management, LCM) on the first device.

The first device may be a terminal device.

The first algorithm and the second algorithm may be algorithms of a same type or different types.

In a possible implementation, the first algorithm is an artificial intelligence/machine learning (Artificial Intelligence/Machine Learning, AI/ML) algorithm, and the second algorithm is a conventional algorithm.

In another possible implementation, the first algorithm and the second algorithm are different artificial intelligence/machine learning (AI/ML) algorithms.

In an optional implementation, a method for obtaining the energy consumption comparison information specifically includes: obtaining first energy consumption information of the first algorithm and second energy consumption information of the second algorithm; and obtaining the energy consumption comparison information based on the first energy consumption information and the second energy consumption information.

The energy consumption comparison information may be a quotient, a difference, or a magnitude comparison result between algorithm energy consumption of different algorithms, or a result of another used calculation method that can represent energy consumption comparison between different algorithms.

In an optional implementation, that the first device may process the energy consumption comparison information and then send processed energy consumption comparison information as a part of the first information to the second device is specifically: obtaining third energy consumption information based on the energy consumption comparison information and electricity quantity information and/or energy consumption configuration information of the first device; and sending the first information including the third energy consumption information to the second device. The third energy consumption information may include items of information such as the energy consumption comparison information, the electricity quantity information of the first device, and the energy consumption configuration information of the first device, or may include one or more energy consumption indicators obtained through calculation based on the items of information.

It should be noted that trigger conditions for sending the first information to the second device may be different.

In a possible implementation, the first device may send the first information to the second device in response to determining that a preset sending condition is met. The preset sending condition may include periodic sending.

In another possible implementation, the first information may be sent in response to receiving a first instruction sent by the second device.

The first instruction may include: a first instruction used to instruct the first device to perform configuration; a first instruction used to instruct the first device to change a configuration; or a first instruction used to query for the first information. The first instruction used to instruct the first device to perform configuration may be a configuration message that includes configuration information. The first instruction used to instruct the first device to change a configuration may be a configuration change message. The first instruction used to query for the first information may be a query message.

In another possible implementation, the first information may be sent in response to the first device being connected to the second device.

In the foregoing algorithm management method, the first information is sent to the second device based on the energy consumption comparison information, so that the second device can manage the algorithm of the first device based on the first information.

According to a second aspect, an algorithm management method applied to a first device is provided, and includes: receiving second information sent by a second device; and managing an algorithm of the first device based on the second information.

The second information includes monitoring information that is of the algorithm of the first device and that is obtained by the second device.

The monitoring information of the algorithm may be performance monitoring information of the algorithm.

The second information may include one or more of the following: a use case indication, an algorithm indication, or a communication system configuration indication.

The second information may be used by the first device to perform algorithm lifecycle management (lifecycle management, LCM) on the first device.

The first device may be a terminal device.

In an optional implementation, the first device may obtain first energy consumption information of a first algorithm and second energy consumption information of a second algorithm.

In an optional implementation, the first device may manage the algorithm of the first device based on the first energy consumption information, the second energy consumption information, and the second information.

The first algorithm and the second algorithm may be algorithms of a same type or different types.

In a possible implementation, the first algorithm is an artificial intelligence/machine learning (Artificial Intelligence/Machine Learning, AI/ML) algorithm, and the second algorithm is a conventional algorithm.

In another possible implementation, the first algorithm and the second algorithm are different artificial intelligence/machine learning (AI/ML) algorithms.

In the foregoing algorithm management method, the second information sent by the second device is received, so that the algorithm of the first device is managed by combining the first energy consumption information, the second energy consumption information, and the second information.

According to a third aspect, an algorithm management method applied to a second device is provided, and includes: receiving first information sent by a first device; and managing an algorithm of the first device based on the first information.

The first information includes energy consumption comparison information of a first algorithm and a second algorithm.

The first information may include the energy consumption comparison information, and may further include one or more of the following: a use case indication, an algorithm indication, or a communication system configuration indication.

The second device may perform algorithm lifecycle management (lifecycle management, LCM) on the first device based on the first information.

The second device may be a network device. The network device may include an access network device and/or a core network device.

In an optional implementation, the second device may obtain first monitoring information of the first algorithm of the first device and/or second monitoring information of the second algorithm of the first device.

The first monitoring information and the second monitoring information are performance monitoring information.

In an optional implementation, the second device may manage the algorithm of the first device based on the first information and the first monitoring information and/or the second monitoring information.

The second device may perform algorithm lifecycle management (lifecycle management, LCM) on the first device based on the first information, the first monitoring information, and the second monitoring information.

The first algorithm and the second algorithm may be algorithms of a same type or different types.

In a possible implementation, the first algorithm is an artificial intelligence/machine learning (Artificial Intelligence/Machine Learning, AI/ML) algorithm, and the second algorithm is a conventional algorithm.

In another possible implementation, the first algorithm and the second algorithm are different artificial intelligence/machine learning (AI/ML) algorithms.

In the foregoing algorithm management method, the first information sent by the first device is received, so that the algorithm of the first device is managed by combining the first information, the first monitoring information, and the second monitoring information.

According to a fourth aspect, an algorithm management method applied to a second device is provided, and includes: obtaining first monitoring information of a first algorithm of a first device and/or second monitoring information of a second algorithm of the first device; and sending second information to the first device based on the first monitoring information and/or the second monitoring information.

The second information is used by the first device to perform algorithm management on the first device.

The second information may further include one or more of the following: a use case indication, an algorithm indication, or a communication system configuration indication. The second information may be used by the first device to perform algorithm lifecycle management (LCM) on the first device.

The first monitoring information and the second monitoring information may be performance monitoring information.

The second device may be a network device. The network device may include an access network device and/or a core network device.

The first algorithm and the second algorithm may be algorithms of a same type or different types.

In a possible implementation, the first algorithm is an artificial intelligence/machine learning (Artificial Intelligence/Machine Learning, AI/ML) algorithm, and the second algorithm is a conventional algorithm.

In another possible implementation, the first algorithm and the second algorithm are different artificial intelligence/machine learning (AI/ML) algorithms.

In an optional implementation, that the first monitoring information and/or the second monitoring information are/is processed and then sent to the first device as a part of the second information specifically includes: obtaining third monitoring information based on the first monitoring information and/or the second monitoring information; and sending the second information including the third monitoring information to the first device.

The third monitoring information may be performance monitoring information.

In the foregoing algorithm management method, the second information is sent, so that the first device can comprehensively manage the algorithm of the first device.

According to a fifth aspect, an apparatus is provided. The communication apparatus may be the first device according to either of the first aspect and the third aspect. The apparatus has a function of the first device. The apparatus is, for example, a terminal device, and includes a fixed device, a mobile device, a handheld device (for example, a mobile phone), a wearable device, a vehicle-mounted device, or a wireless apparatus (for example, a communication module, a modem, or a chip system) built in the foregoing device.

In an optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send first information (energy consumption information) to a second device, where the first information (energy consumption information) is used by the second device to perform algorithm management on the first device; and the transceiver unit (or the receiving unit) is configured to receive an algorithm management instruction from the second device.

In an optional implementation, the apparatus further includes a storage unit (sometimes also referred to as a storage module). The processing unit is configured to: be coupled to the storage unit, and execute a program or instructions in the storage unit, to enable the apparatus to perform the function of the first device according to either of the first aspect and the third aspect.

According to a sixth aspect, an apparatus is provided. The communication apparatus may be the second device according to either of the second aspect and the fourth aspect. The apparatus has a function of the second device. The apparatus is, for example, a network device. In an optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send second information (monitoring information) to a first device, where the second information (monitoring information) is used by the first device to manage an algorithm; and the transceiver unit (or the receiving unit) is configured to receive first information (energy consumption information) from the first device.

In an optional implementation, the apparatus further includes a storage unit (sometimes also referred to as a storage module). The processing unit is configured to: be coupled to the storage unit, and execute a program or instructions in the storage unit, to enable the apparatus to perform the function of the second device according to either of the second aspect and the fourth aspect.

According to a seventh aspect, the present invention provides a non-volatile computerreadable storage medium storing one or more programs, where the one or more programs include instructions, and when the instructions are executed by the first device according to any one of the first aspect or the foregoing possible implementations, the first device is enabled to perform:
obtaining energy consumption comparison information of a first algorithm and a second algorithm; and sending first information to a second device based on the energy consumption comparison information.

According to an eighth aspect, the present invention provides a non-volatile computerreadable storage medium storing one or more programs, where the one or more programs include instructions, and when the instructions are executed by the first device according to any one of the second aspect or the foregoing possible implementations, the first device is enabled to perform:
obtaining first energy consumption information of a first algorithm and second energy consumption information of a second algorithm; receiving second information sent by a second device; and managing an algorithm of the first device based on the first energy consumption information, the second energy consumption information, and the second information.

According to a ninth aspect, the present invention provides a non-volatile computerreadable storage medium storing one or more programs, where the one or more programs include instructions, and when the instructions are executed by a second device according to any one of the third aspect or the foregoing possible implementations, the second device is enabled to perform:
obtaining first monitoring information of a first algorithm of a first device and second monitoring information of a second algorithm of the first device; receiving first information sent by the first device; and managing an algorithm of the first device based on the first information, the first monitoring information, and the second monitoring information.

According to a tenth aspect, the present invention provides a non-volatile computerreadable storage medium storing one or more programs, where the one or more programs include instructions, and when the instructions are executed by a second device according to any one of the fourth aspect or the foregoing possible implementations, the second device is enabled to perform:
obtaining first monitoring information of a first algorithm of a first device and second monitoring information of a second algorithm of the first device; and
sending second information to the first device based on the first monitoring information and the second monitoring information.

According to an eleventh aspect, an algorithm management system is provided, and includes a first device and a second device.

The first device may be the first device according to any one of the first aspect, the second aspect, the fifth aspect, the seventh aspect, the eighth aspect, or the foregoing implementations. The second device may be the second device according to any one of the third aspect, the fourth aspect, the sixth aspect, the ninth aspect, the tenth aspect, or the foregoing implementations.

### BRIEF DESCRIPTION OF DRAWINGS

FIG. 1 is a schematic flowchart of an algorithm management method according to an embodiment of the present invention;
FIG. 2 is a schematic flowchart of another algorithm management method according to an embodiment of the present invention;
FIG. 3 is a diagram of an apparatus according to an embodiment of the present invention; and
FIG. 4 is a diagram of another apparatus according to an embodiment of the present invention.

### DESCRIPTION OF EMBODIMENTS

The following clearly describes the technical solutions in embodiments of the present invention with reference to the accompanying drawings in embodiments of the present invention. It is clear that the described embodiments are merely some but not all of embodiments of the present invention. All other embodiments obtained by a person of ordinary skill in the art based on embodiments of the present invention shall fall within the protection scope of the present invention.

A system architecture in embodiments of this application includes at least two devices: a first device and a second device. The first device and the second device may have a communication function. For example, the first device may be a terminal device, and the second device may be a network device.

The terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), telemedicine (telemedicine), a smart grid (smart grid), smart furniture, smart office, smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

The network device may include an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolved base station in the 3rd generation partnership project (3rd generation partnership project, 3GPP), and an access node, a wireless relay node, a wireless backhaul node, and the like in a wireless fidelity (wireless fidelity, Wi-Fi) system. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, an access network device in a vehicle-to-everything (vehicle-to-everything, V2X) technology may be a road side unit (road side unit, RSU). The base station may communicate with the terminal device, or may communicate with the terminal device via the relay station. The terminal device may communicate with the plurality of base stations in different access technologies. The core network device is configured to implement functions such as mobility management, data processing, session management, and policy and charging. Names of devices that implement a core network function in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first information and second information may be same information, or may be different information. In addition, such names do not indicate different content, sizes, transmitting ends/receiving ends, priorities, importance, or the like of the two pieces of information. In addition, step numbers in embodiments described in this application are merely intended to distinguish between different steps, but are not intended to limit a sequence of the steps. For example, S401 may be performed before S402, may be performed after S402, or may be simultaneously performed with S402.

The technical solutions provided in embodiments of this application may be applied to a 4th generation mobile communication technology (4th generation, 4G) system, for example, a long term evolution (long term evolution, LTE) system; may be applied to a 5th generation mobile communication technology (5th generation, 5G) system, for example, a new radio (new radio, NR) system; or may be applied to a next generation mobile communication system or another similar communication system, for example, a 6th generation mobile communication technology (6th generation, 6G) system. This is not specifically limited.

The following describes technical features in embodiments of this application.

After an AI/ML technology is introduced into a wireless communication system, an AI/ML mode and a conventional mode are expected to be used in the wireless communication system within a period of time. The conventional mode may include a conventional algorithm, and the AI/ML mode may include one or more different AI/ML models. The model may also be referred to as an algorithm. It may be understood that an AI/ML algorithm may be understood as the AI/ML model, or understood as that the AI/ML model is used as a core, supplemented by the conventional algorithm. The conventional algorithm may include a non-AI/ML algorithm, for example, an existing algorithm widely used in a communication system. The existing algorithm widely used in the communication system may include an algorithm that is based on a mathematical model, and an algorithm that is based on simple prediction, filtering, and the like. The algorithm that is based on simple prediction, filtering, and the like may include an algorithm that is based on Kalman filtering, moving average, or autoregression, and the like. For example, for a channel state information compression (CSI compression) use case, the conventional algorithm may include a codebook-based CSI compression algorithm.

When algorithm management (for example, lifecycle management) is performed, monitoring information and energy consumption information of the algorithm need to be comprehensively considered. Alternatively, the energy consumption information may be power information, where the power information is energy consumption information per unit of time. For ease of description, the energy consumption information is used as an example for description in embodiments of this application.

For example, when the second device in the wireless communication system can obtain monitoring information of an algorithm of the first device, but does not have energy consumption information of the algorithm of the first device, information transmission needs to be performed between the first device and the second device, so that the first device or the second device can manage the algorithm of the first device by combining the monitoring information and the energy consumption information.

The energy consumption information may include one or more of the following: algorithm energy consumption and energy consumption comparison information. Optionally, the energy consumption information may further include electricity quantity information of the first device and energy consumption configuration information of the first device.

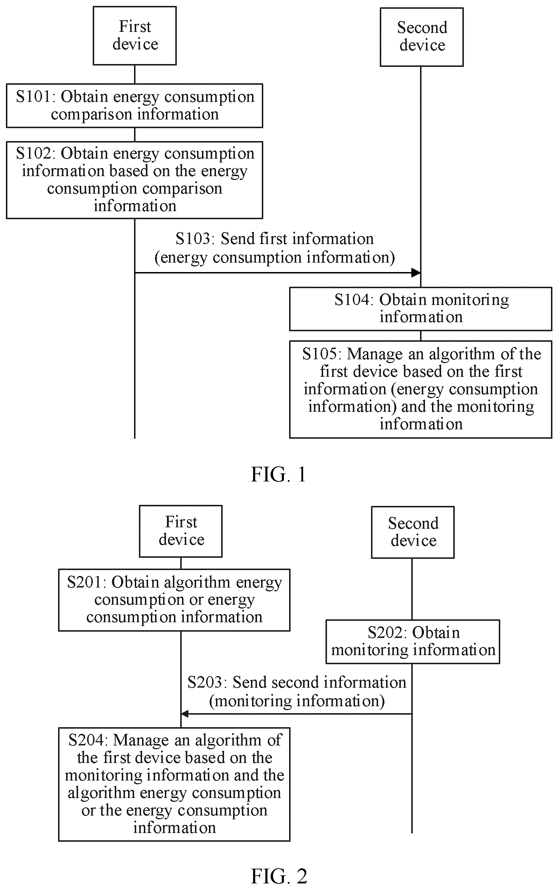

FIG. 1 shows an example of an algorithm management method implemented by sending, by a first device, first information including energy consumption information to a second device. The method includes the following steps.

S101: The first device obtains energy consumption comparison information.

The energy consumption comparison information may include comparison information of algorithm energy consumption of at least two algorithms for executing a same task. The algorithm may include a conventional algorithm and an AI/ML algorithm. It should be noted that executing a task may be understood as executing a use case for K times, where K is a positive integer. The algorithm energy consumption may include energy consumed by the algorithm for executing the task.

The use case may include channel state information compression (CSI compression), positioning (Positioning), beam management (Beam Management), and the like. One time of use case calculation may be one time of CSI compression task calculation (for example, outputting compressed CSI based on inputted CSI that is before compression), one time of positioning calculation (for example, outputting location information or other positioning assistance information based on inputted information needed for positioning), or one time of beam management calculation (for example, outputting, based on a plurality of pieces of inputted beam information, Kb pieces of beam information whose expected signals are the strongest, where Kb is a positive integer).

That the energy consumption comparison information is comparison information of algorithm energy consumption of a first algorithm and a second algorithm of the first device, and the use case is the channel state information compression (CSI compression) is used as an example. The first algorithm may be an AI/ML algorithm, that is, using the AI/ML algorithm to perform a CSI compression task, and the second algorithm may be a conventional algorithm, that is, performing a codebook-based CSI compression task. Alternatively, the first algorithm and the second algorithm may be using different AI/ML algorithms to perform a CSI compression task.

The algorithm energy consumption may further include other work energy consumption caused by executing the task, such as energy consumption of auxiliary work of the task and energy consumption of upstream and downstream work of the task. That the use case is the channel state information compression (CSI compression) is used as an example. The energy consumption of the auxiliary work may include but is not limited to energy consumption caused by one or more of the following work: CSI data preprocessing, performance monitoring of one or more AI/ML algorithms, and performance monitoring of the conventional algorithm. The energy consumption of the upstream and downstream work of the task may include but is not limited to energy consumption caused by one or more of the following work: obtaining the CSI that is before compression and sending the compressed CSI.

The comparison information may be a quotient, a difference, or a magnitude comparison result between algorithm energy consumption of different algorithms, or a result of another used calculation method that can represent energy consumption comparison between different algorithms.

It should be noted that methods for obtaining the algorithm energy consumption and/or the energy consumption comparison information are not limited herein, and include a method for directly obtaining the energy consumption comparison information and a method for indirectly obtaining the energy consumption comparison information.

The method for directly obtaining the energy consumption comparison information may be a method for directly obtaining energy consumption comparison information of a plurality of algorithms, for example, a configuration obtaining method, an estimation method, or a practical measurement method.

The method for indirectly obtaining the energy consumption comparison information may be obtaining energy consumption comparison information through calculation after obtaining algorithm energy consumption information of each algorithm. For different algorithms, different methods for obtaining the algorithm energy consumption information may be used for different use cases. The method for obtaining the algorithm energy consumption information may include a combination of one or more of the following methods: the configuration obtaining method, the estimation method, and the practical measurement method.

The configuration obtaining method may include: obtaining, by the first device, from default settings information of the first device, and obtaining, by the first device, from another device, for example, from a second device, or from a server.

The estimation method may be used for calculation by using an approximate formula. The approximate formula is not limited. A possible algorithm energy consumption calculation formula J=N/E*[(U_P*(1-U_C))/U_C+1] is provided herein, where J is energy consumption, N is an operand (for example, an operand for multiplication and/or addition) of an algorithm, E is energy efficiency of a processor executing the algorithm, U_P is a background power ratio of the processor executing the algorithm, and U_C is computing resource utilization during the execution of the algorithm in the processor. The background power ratio may be understood as a ratio of background power to peak power.

The algorithm operand N may be obtained by the first device from the server or the second device, or obtained by the first device through self-evaluation after the algorithm is received. The server may be a server of the first device, a server of the second device, or a thirdparty server. The energy efficiency E of the processor and the background power ratio U_P of the algorithm processor may be obtained from the first device, the second device, or another device. A method for obtaining the computing resource utilization U_C includes: obtaining from the second device, obtaining by executing the algorithm by the first device, or obtaining from another device.

In the foregoing practical measurement method, corresponding algorithm energy consumption or energy consumption comparison information is obtained by actually executing the algorithm.

It may be understood that the configuration obtaining method, the estimation method, and the practical measurement method are example methods. The energy consumption comparison information may be obtained directly or indirectly by adjusting data, formula parameters, and the like that are configured in the foregoing methods.

S102: Obtain the energy consumption information based on the energy consumption comparison information.

For example, the energy consumption information may include the energy consumption comparison information. Optionally, the energy consumption information may further include electricity quantity information of the first device and energy consumption configuration information of the first device. For example, the energy consumption configuration information may include a performance-first mode, a battery life-first mode, or a balancing mode.

It may be understood that the energy consumption information may include items of information such as the energy consumption comparison information, the electricity quantity information of the first device, and the energy consumption configuration information of the first device, or may include one or more energy consumption indicators obtained through calculation based on the items of information. A manner of obtaining the one or more energy consumption indicators through the calculation based on the items of information in the energy consumption information is not limited in this embodiment of this application.

For example, this embodiment of this application provides a possible energy consumption indicator calculation method, to obtain an energy consumption indicator through calculation based on the energy consumption comparison information, the electricity quantity information, and the energy consumption configuration information, where the indicator is referred to as equivalent energy consumption comparison information of two algorithms. A method for obtaining the equivalent energy consumption comparison information is not limited in this embodiment of this application. A possible comprehensive idea is as follows: If an electricity quantity is smaller or the energy consumption configuration information focuses more on battery life, an energy consumption comparison value between the two algorithms is larger, to provide guidance on preferential selection of a low energy consumption mode. Two possible calculation methods are as follows:

A first possible calculation method is: obtaining, through calculation according to a formula α=( log ( energy consumption of the first algorithm/energy consumption of the second algorithm)y(electricity quantity "ratio" × configuration value), equivalent energy consumption comparison information presented in a value form. A value range of the electricity quantity ratio may be (0%, 100%). The configuration value is A1 when the energy consumption configuration information is performance-first. The configuration value is A2 when the energy consumption configuration information is the balancing mode. The configuration value is A3 when the energy consumption configuration information is battery life-first. A1, A2, and A3 are positive numbers, and A1≥A2≥A3.

A second possible calculation method is: obtaining the energy consumption comparison value according to a formula β=[log [energy consumption of the first algorithm/energy consumption of the second algorithm]]. When β>0, the energy consumption of the first algorithm is greater than the energy consumption of the second algorithm. On the contrary, when β<0, the energy consumption of the first algorithm is less than the energy consumption of the second algorithm. An electricity quantity threshold is set. An absolute value of the energy consumption comparison value is increased by B1 when the electricity quantity is less than the electricity quantity threshold. An absolute value of the energy consumption comparison value is increased by B2 when the energy consumption configuration information is configured to be battery life-first. An absolute value of the energy consumption comparison value is decreased by B3 when the energy consumption configuration information is configured to be performance-first. B1, B2, and B3 are positive numbers. When β=0, the energy consumption of the first algorithm is equal to the energy consumption of the second algorithm. In this case, the electricity quantity and the energy consumption configuration information do not affect the energy consumption comparison value β.

It should be noted that the equivalent energy consumption comparison information may be the foregoing calculation result, or may be a result obtained by performing saturation truncation, quantization, codebook mapping, and the like on the foregoing calculation result.

S103: The first device sends the first information (energy consumption information) to the second device, and the second device receives the first information (energy consumption information).

The first information includes the energy consumption information and/or algorithm request information obtained based on the energy consumption information.

The energy consumption information may be presented in one or more of the following manners: a value and an energy consumption information segmentation level. The value may be a calculation result or a result obtained by performing saturation truncation, quantization, codebook mapping, and the like on the calculation result. A presentation manner of the energy consumption information segmentation level may include level information. A segmentation method of the level information may be agreed on by the first device and the second device in advance.

The algorithm request information may include an algorithm change request obtained by the first device based on the energy consumption information. For example, algorithms may be sorted based on magnitudes of energy consumption of the algorithms, to obtain energy consumption rankings of the algorithms. The electricity quantity threshold of the first device is set. When the electricity quantity of the first device is greater than the electricity quantity threshold, it is considered that the electricity quantity is sufficient. When the electricity quantity is sufficient, and the energy consumption configuration information is configured to be performance-first, the first device may send the algorithm request information to the second device based on a ranking of a current algorithm in the energy consumption rankings of the algorithms, to apply for switching to an algorithm with better performance. The current algorithm may be an algorithm that is being used by the first device in the use case.

It may be understood that, generally, the algorithm with the better performance is an algorithm with higher energy consumption in the energy consumption rankings of the algorithms.

Optionally, the first information may further include one or more pieces of the following information: a use case indication, an algorithm indication, or a communication system configuration indication. The use case indication may include use case information, and the algorithm indication may include an algorithm identifier of the algorithm. The algorithm identifier may also be referred to as an algorithm ID. For example, when the algorithm is the conventional algorithm, the algorithm identifier may be omitted, and the algorithm identifier is not included to indicate that the conventional algorithm is used. In other words, the algorithm may be indicated in an explicit indication manner like the algorithm identifier, or may be indicated in an implicit indication manner. This is not limited in this embodiment of this application. A communication system configuration may be a network configuration or a device configuration. The network configuration may include a frequency band, and the device configuration may include a quantity of antennas of the first device.

Sending modes of the sending may include periodic sending and aperiodic sending.

For the periodic sending, a sending periodicity may be configured by the second device.

The aperiodic sending may include event-triggered sending.

A trigger condition (event) of the event-triggered sending may include: The first device is connected to the second device, a configuration of the first device is changed, a configuration change message sent by the second device is received, a configuration message sent by the second device is received, the electricity quantity is less than the threshold, an electricity quantity change amount or an electricity quantity change rate is greater than a threshold, a query message sent by the second device is received, and the like. When the event trigger condition is met, the first device sends the first information or the first device sends the first information after obtaining permission for a request.

For example, it is assumed that the trigger condition of the event-triggered sending is that the first device is connected to the second device. In response to the first device being connected to the second device, the first device may send the first information as capability information of the first device to the second device. The first device and the second device may agree on sent content and a sending manner in advance. The sent content may include a meaning represented by each field of the first information.

For example, it is assumed that the trigger condition of the event-triggered sending is that the query message sent by the second device is received. The first device may send the first information to the second device in response to receiving the query message. In other words, the query message may indicate the first device to send first information of a target algorithm and the current algorithm. The target algorithm may include an algorithm configured in a target manner by the second device for the first device to use.

For example, it is assumed that the trigger condition of the event-triggered sending is that the configuration message sent by the second device is received. The first device may send the first information to the second device in response to the first device receiving the configuration message. The configuration message sent by the second device to the first device may be used as a basis for changing the configuration of the first device.

For example, it is assumed that the trigger condition of the event-triggered sending is that the configuration change message sent by the second device is received. The first device may send the first information to the second device in response to receiving the configuration change message. The configuration change message may include or may not include configuration information. For example, if the configuration change message does not include the configuration information, the first device may determine the first information of the target algorithm and the current algorithm.

The configuration information may include one or more of the following: the sending mode and configuration information of the sending mode. For example, when the sending mode is the periodic sending, the configuration information of the sending mode may include the sending periodicity. When the sending mode is the event-triggered sending, the configuration information of the sending mode may include a configuration of a trigger event and/or a threshold in the trigger event.

The configuration information may further include one or more of the following: the use case indication, the algorithm indication, or the communication system configuration indication. Descriptions of the use case indication, the algorithm indication, and the communication system configuration indication are the same as those in S103.

It should be noted that a part or all of content of the configuration information may alternatively be determined by the first device and the second device in advance.

S104: The second device obtains monitoring information.

The monitoring information may include monitoring information of one or more algorithms or monitoring comparison information of the algorithms. The first algorithm and the second algorithm of the first device are used as an example. The monitoring information may include first monitoring information of the first algorithm of the first device and second monitoring information of the second algorithm, or monitoring comparison information obtained by comparing the first monitoring information with the second monitoring information. For different use cases, manners of obtaining monitoring information of different algorithms may be different. The manner of obtaining the monitoring information is not limited in this embodiment of this application.

That the use case is the CSI compression, the first device is a terminal device, the second device is a network device, and the monitoring information is performance monitoring information is used as an example. It may be understood that, in a normal working case, the terminal device sends the compressed CSI to the network device. To obtain the performance monitoring information, the terminal device may send uncompressed or high-fidelity compressed CSI to the network device, and the network device decompresses the compressed CSI, and compares a decompressed CSI with the uncompressed or high-fidelity compressed CSI, to obtain algorithm performance monitoring information of the compression and decompression, in the CSI compression use case, of the current algorithm. A comparison method may include calculating a mean square error (mean square error, MSE), and algorithm performance may be represented by the mean square error (MSE).

It may be understood that, the performance monitoring information may include items of information such as performance monitoring information of the one or more algorithms or performance monitoring comparison information of the algorithms, or may include one or more performance monitoring indicators obtained through calculation based on the items of information.

The performance indicator may include one or more of the following: the algorithm performance and communication system performance. The algorithm performance may include but is not limited to one or more of the following: precision, a recall rate, an error, and the like, for example, a generalized cosine similarity (generalized cosine similarity, GCS) or a normalized mean square error (normalized mean square error, NMSE) oriented to the CSI compression, and location precision oriented to positioning. The communication system performance may include but is not limited to one or more of the following: a throughput, a bit error rate (bit error rate, BER), a block error rate (block error rate, BLER), an ACK (acknowledgment) ratio/a NACK (not acknowledgment) ratio, a retransmission rate, and the like.

It may be understood that a representation manner of the performance monitoring information may be indicated to be set or agreed on in advance. The representation manner of the performance monitoring information may include a performance result, a statistical result, and a performance comparison result. The performance result and/or the statistical result include/includes but are/is not limited to a mean value, a variance, a percentile, a histogram, and rankings. The performance comparison result may include a performance monitoring comparison result between two algorithms.

Optionally, the monitoring information may further include one or more pieces of the following information: the use case indication, the algorithm indication, or the communication system configuration indication. The descriptions of the use case indication, the algorithm indication, and the communication system configuration indication are the same as those in S 103. When the first information includes the use case indication, the second device may obtain the use case indication from the first device. When the first information does not include the use case indication, the second device obtains the use case indication from the second device.

It should be noted that S104 may be performed before S101, may be performed after S101, or may be simultaneously performed with S 101. S104 may be performed before S102, may be performed after S102, or may be simultaneously performed with S102. In addition, S104 may be performed before S103, may be performed after S103, or may be simultaneously performed with S103. Alternatively, S104 may not be performed. This is not limited in this embodiment of this application.

S105: The second device manages the algorithm of the first device based on the first information (energy consumption information) and the monitoring information.

Optionally, the first information (energy consumption information) and the monitoring information may include one or more pieces of the following information: the use case indication, the algorithm indication, or the communication system configuration indication. The descriptions of the use case indication, the algorithm indication, and the communication system configuration indication are the same as those in S103.

The monitoring information obtained by the second device may be the performance monitoring information, and the monitoring comparison information in the monitoring information may be the performance monitoring comparison information.

The second device may obtain the energy consumption information based on the first information. When the energy consumption information includes the items of information such as the energy consumption comparison information, the electricity quantity information of the first device, and the energy consumption configuration information of the first device, the second device may manage the algorithm of the first device based on the items of information or based on processed items of information. When the energy consumption information includes the one or more energy consumption indicators, the second device may manage the algorithm of the first device based on the energy consumption indicator. A manner of processing the items of information includes but is not limited to obtaining one or more indicators through calculation based on the items of information by using, for example, the calculation method in S102. It may be understood that for different algorithms, different use cases, and the like, there may be different solutions for the second device to manage the algorithm of the first device based on the first information and the monitoring information. This is not limited in this application.

For example, the second device may perform algorithm lifecycle management (LCM) on the first device based on the performance monitoring comparison information and the energy consumption comparison information in the energy consumption information. In a possible manner, the energy consumption comparison information affects a performance comparison threshold used for the algorithm lifecycle management (LCM), or the performance monitoring comparison information affects an energy consumption comparison threshold used for the algorithm lifecycle management (LCM). A possible management solution is provided by using an example in which the energy consumption comparison information affects the performance comparison threshold used for the algorithm lifecycle management (LCM), and the performance monitoring comparison information is a quotient of the first monitoring information and the second monitoring information.

The performance comparison threshold and the energy consumption comparison threshold are set, and a mapping relationship between the energy consumption comparison threshold and the performance comparison threshold is established. A larger energy consumption comparison threshold Te indicates a larger performance comparison threshold Tp. For example, the mapping relationship between the energy consumption comparison threshold and the performance comparison threshold may be (Te-1, Tp-1), (Te-2, Tp-2), (Te-3, Tp-3), ..., and (Te-L, Tp-L), where Te is the energy consumption comparison threshold, Tp is the performance comparison threshold, and L is a positive integer. For any energy consumption comparison threshold Te-i, where i is a positive integer of [1, L], when Te-i≤energy consumption comparison information≤Te-(i+1) is satisfied, the performance comparison threshold is Tp-i.

The performance comparison threshold is obtained through mapping based on the energy consumption comparison information. When the performance monitoring comparison information is greater than the performance comparison threshold, the second device may manage the algorithm on the first device, and make the second algorithm fall back (fallback) or switch (switch) to the first algorithm.

Optionally, when S104 is not performed, the second device may manage the algorithm of the first device based only on the first information (energy consumption information). Details are not described herein again.

It may be understood that the foregoing determining condition and the method for managing the first device by the second device are merely examples, and the second device may alternatively use another determining condition and/or management method. This is not limited in this embodiment.

In some embodiments, S101, S102, S103, and S105 in FIG. 1 may be separately performed.

In FIG. 1, an example in which the first device sends the first information (energy consumption information) to the second device is used for description. The second device manages the algorithm based on the energy consumption information and the monitoring information. It may be understood that, as shown in FIG. 2, alternatively, a second device may send monitoring information to a first device, and the first device manages an algorithm based on the monitoring information and algorithm energy consumption or energy consumption information.

S201: The first device obtains the algorithm energy consumption or the energy consumption information.

It may be understood that the algorithm energy consumption may include energy consumed by performing K times of use case calculation by the algorithm, where K is a positive integer. The energy consumption information may include energy consumption comparison information obtained based on comparison information of algorithm energy consumption of at least two algorithms for executing a same task. Descriptions of the algorithm energy consumption are the same as those in S101, and descriptions of the energy consumption information are the same as those in S102.

Optionally, the energy consumption information may further include electricity quantity information of the first device and energy consumption configuration information of the first device.

A method for obtaining the algorithm energy consumption and the energy consumption comparison information is the same as that in S101. A representation manner of the energy consumption information may be the same as that in S102.

It should be noted that S201 may be performed before S202, may be performed after S202, or may be simultaneously performed with S202. In addition, S201 may be performed before S203, may be performed after S203, or may be simultaneously performed with S203. Alternatively, S201 may not be performed. This is not limited in this embodiment of this application.

S202: The second device obtains the monitoring information.

Descriptions of obtaining the monitoring information by the second device are the same as those in S104.

S203: The second device sends second information (monitoring information).

The second information may include the monitoring information. A format of the monitoring information may be agreed on by the second device and the first device. The monitoring information may include items of information such as monitoring information of one or more algorithms or monitoring comparison information of the algorithms, or may include one or more monitoring indicators obtained through calculation based on the items of information.

For example, the monitoring information may be performance monitoring information. The performance monitoring information may include performance monitoring information of the one or more algorithms or performance monitoring comparison information of the algorithms. Descriptions of the performance monitoring information are the same as those in S104.

Optionally, the second information may further include one or more of the following: a use case indication, an algorithm indication, or a communication system configuration indication. Descriptions of the use case indication, the algorithm indication, and the communication system configuration indication are the same as those in S103.

S204: The first device receives the second information, and manages the algorithm of the first device based on the monitoring information and the algorithm energy consumption or the energy consumption information.

The first device may obtain the monitoring information based on the second information. The monitoring information may be the performance monitoring information. For example, the first device may perform algorithm lifecycle management (LCM) on the first device based on the energy consumption information and the performance monitoring information.

In a possible manner, the energy consumption information affects a performance comparison threshold used for the algorithm lifecycle management (LCM), or the performance monitoring comparison information affects an energy consumption comparison threshold used for the algorithm lifecycle management (LCM). A possible management solution is the same as that in S105 by using an example in which the energy consumption information affects the performance comparison threshold used for the algorithm lifecycle management (LCM), and the performance monitoring comparison information is a quotient of first monitoring information and second monitoring information.

It may be understood that, in the management solution, the performance comparison threshold may be obtained through mapping based on the energy consumption information. When the performance monitoring comparison information is less than the performance comparison threshold, it is considered that a first algorithm has no performance advantage over a second algorithm. If an electricity quantity of the first device is less than a specified electricity quantity threshold, the first device may request the second device to switch or fall back to the second algorithm with low energy consumption, or the first device determines to switch or fall back to the second algorithm with low energy consumption. That a use case is CSI, the first algorithm is an AI/ML algorithm, and the second algorithm is a conventional algorithm is used as an example. When the first algorithm has no performance advantage over the second algorithm, the first device may request to fall back to the conventional algorithm, to perform codebook-based CSI compression.

Optionally, when S201 is not performed, the first device may manage the algorithm of the first device based only on the second information. Details are not described herein again.

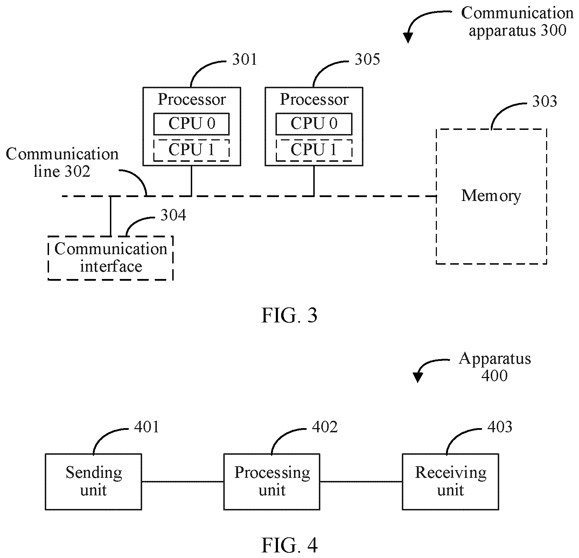

FIG. 3 is a diagram of a structure of communication apparatus according to an embodiment of this application.

The communication apparatus 300 includes at least one processor 301. The processor 301 may be configured for internal processing of the apparatus, to implement a specific control processing function. Optionally, the processor 301 includes instructions. Optionally, the processor 301 may store data. Optionally, different processors may be independent devices, and may be at different physical locations, or may be located on different integrated circuits. Optionally, different processors may be integrated into one or more processors, for example, integrated into one or more integrated circuits.

Optionally, the communication apparatus 300 includes one or more memories 303, configured to store instructions. Optionally, the memory 303 may further store data. The processor and the memory may be separately disposed, or may be integrated together.

Optionally, the communication apparatus 300 includes a communication line 302 and at least one communication interface 304. Because the memory 303, the communication line 302, and the communication interface 304 are all optional, the memory 303, the communication line 302, and the communication interface 304 are all represented by dashed lines in FIG. 3.

Optionally, the communication apparatus 300 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 300 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 301 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 302 may include a path for information transmission between the foregoing components.

The communication interface 304 is any apparatus like a transceiver, and is configured to communicate with another device or a communication network, for example, Ethernet, a radio access network (radio access network, RAN), a wireless local area network (wireless local area network, WLAN), or a wired access network.

The memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a disk storage medium or another magnetic storage device, or any other medium that can be used to carry or store expected program code in a form of an instruction or a data structure and that can be accessed by a computer, but is not limited thereto. The memory 303 may exist independently, and is connected to the processor 301 through the communication line 302. Alternatively, the memory 303 may be integrated with the processor 301.

The memory 303 is configured to store computer-executable instructions for performing the solutions in this application, and the processor 301 controls execution. The processor 301 is configured to execute the computer-executable instructions stored in the memory 303, to implement the steps performed by the first device in the embodiment shown in FIG. 1 or FIG. 2, or implement the steps performed by the second device in the embodiment shown in FIG. 1 or FIG. 2.

Optionally, the computer-executable instructions in this embodiment of this application may also be referred to as application program code. This is not specifically limited in this embodiment of this application.

During specific implementation, in an embodiment, the processor 301 may include one or more CPUs such as a CPU 0 and a CPU 1 in FIG. 3.

During specific implementation, in an embodiment, the communication apparatus 300 may include a plurality of processors such as the processor 301 and a processor 305 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 3 is a chip, for example, a chip in the first device or a chip in the second device, the chip includes the processor 301 (which may further include the processor 305), the communication line 302, and the communication interface 304. Optionally, the chip may include the memory 303. Specifically, the communication interface 304 may be an input interface, a pin, a circuit, or the like. The memory 303 may be a register, a cache, or the like. The processor 301 and the processor 305 each may be a general-purpose CPU, a microprocessor, an ASIC, or one or more integrated circuits configured to control program execution of the algorithm management method in any one of the foregoing embodiments.

In embodiments of this application, division into functional modules may be performed on the apparatus based on the foregoing method examples. For example, division into functional modules may be performed based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used. For example, when division into functional modules is performed based on corresponding functions, FIG. 4 is a diagram of an apparatus. The apparatus 400 may be the first device or the second device in the foregoing method embodiments, or a chip in the first device or a chip in the second device. The apparatus 400 includes a sending unit 401, a processing unit 402, and a receiving unit 403.

It should be understood that the apparatus 400 may be configured to implement the steps performed by the first device or the second device in the algorithm management method in embodiments of this application. For related features, refer to the embodiment shown in FIG. 1 or FIG. 2. Details are not described herein again.

Optionally, functions/implementation processes of the sending unit 401, the receiving unit 403, and the processing unit 402 in FIG. 4 may be implemented by the processor 301 in FIG. 3 by invoking the computer-executable instructions stored in the memory 303. Alternatively, a function/implementation process of the processing unit 402 in FIG. 4 may be implemented by the processor 301 in FIG. 3 by invoking the computer-executable instructions stored in the memory 303, and functions/implementation processes of the sending unit 401 and the receiving unit 403 in FIG. 4 may be implemented through the communication interface 304 in FIG. 3.

Optionally, when the apparatus 400 is the chip or a circuit, functions/implementation processes of the sending unit 401 and the receiving unit 403 may alternatively be implemented through a pin, a circuit, or the like.

## Claims

1. An algorithm management method, applied to a first device and comprising:
obtaining energy consumption comparison information of a first algorithm and a second algorithm; and
sending first information to a second device based on the energy consumption comparison information, wherein the first information is used by the second device to perform algorithm management on the first device.

2. The method according to claim 1, wherein
the first algorithm is an artificial intelligence/machine learning (Artificial Intelligence/Machine Learning, AI/ML) algorithm, and the second algorithm is a conventional algorithm; or
the first algorithm and the second algorithm are different artificial intelligence/machine learning (AI/ML) algorithms.

3. The method according to claim 1 or 2, wherein the obtaining energy consumption comparison information of a first algorithm and a second algorithm comprises:
obtaining first energy consumption information of the first algorithm and second energy consumption information of the second algorithm; and
obtaining the energy consumption comparison information based on the first energy consumption information and the second energy consumption information.

4. The method according to any one of claims 1 to 3, wherein the sending the first information to a second device based on the energy consumption comparison information specifically comprises:
obtaining third energy consumption information based on the energy consumption comparison information and electricity quantity information and/or energy consumption configuration information of the first device; and
sending the first information comprising the third energy consumption information to the second device.

5. The method according to any one of claims 1 to 4, wherein the first information further comprises one or more of the following: a use case indication, an algorithm indication, or a communication system configuration indication.

6. The method according to any one of claims 1 to 5, wherein the sending the first information to a second device specifically comprises:
sending, by the first device, the first information to the second device in response to determining that a preset sending condition is met; or
sending the first information in response to receiving a first instruction sent by the second device.

7. The method according to claim 6, wherein the first instruction comprises:
a first instruction used to instruct the first device to change a configuration;
a first instruction used to instruct the first device to perform configuration; or
a first instruction used to query for the first information.

8. The method according to any one of claims 1 to 7, wherein that the first information is used by the second device to perform algorithm management on the first device specifically comprises:
the first information is used by the second device to perform algorithm lifecycle management (lifecycle management, LCM) on the first device.

9. An algorithm management method, applied to a first device, wherein the method comprises:
receiving second information sent by a second device, wherein the second information comprises monitoring information that is of an algorithm of the first device and that is obtained by the second device; and
managing the algorithm of the first device based on the second information.

10. The method according to claim 9, wherein the method further comprises:
obtaining first energy consumption information of a first algorithm and second energy consumption information of a second algorithm.

11. The method according to claim 10, wherein the managing the algorithm of the first device based on the second information comprises:
managing the algorithm of the first device based on the first energy consumption information, the second energy consumption information, and the second information.

12. The method according to any one of claims 9 to 11, wherein
the first algorithm is an artificial intelligence/machine learning (Artificial Intelligence/Machine Learning, AI/ML) algorithm, and the second algorithm is a conventional algorithm; or
the first algorithm and the second algorithm are different artificial intelligence/machine learning (AI/ML) algorithms.

13. The method according to any one of claims 9 to 12, wherein the monitoring information of the algorithm is performance monitoring information of the algorithm.

14. The method according to any one of claims 9 to 13, wherein the second information further comprises one or more of the following: a use case indication, an algorithm indication, or a communication system configuration indication.

15. The method according to any one of claims 9 to 14, wherein that the second information is used by the first device to perform algorithm management on the first device specifically comprises:
the second information is used by the first device to perform algorithm lifecycle management (lifecycle management, LCM) on the first device.

16. An algorithm management method, applied to a second device, wherein the method comprises:
receiving first information sent by a first device, wherein the first information comprises energy consumption comparison information of a first algorithm and a second algorithm; and
managing an algorithm of the first device based on the first information.

17. The method according to claim 16, wherein the method further comprises:
obtaining first monitoring information of the first algorithm of the first device and/or second monitoring information of the second algorithm of the first device.

18. The method according to claim 17, wherein the managing an algorithm of the first device based on the first information comprises:
managing the algorithm of the first device based on the first information and the first monitoring information and/or the second monitoring information.

19. The method according to any one of claims 16 to 18, wherein
the first algorithm is an artificial intelligence/machine learning (Artificial Intelligence/Machine Learning, AI/ML) algorithm, and the second algorithm is a conventional algorithm; or
the first algorithm and the second algorithm are different artificial intelligence/machine learning (AI/ML) algorithms.

20. The method according to any one of claims 16 to 19, wherein the first information further comprises one or more of the following: a use case indication, an algorithm indication, or a communication system configuration indication.

21. The method according to any one of claims 16 to 20, wherein the first monitoring information and the second monitoring information are performance monitoring information.

22. The method according to any one of claims 16 to 21, wherein the managing the algorithm of the first device based on the first information, the first monitoring information, and the second monitoring information comprises:
performing algorithm lifecycle management (lifecycle management, LCM) on the first device based on the first information, the first monitoring information, and the second monitoring information.

23. The method according to any one of claims 16 to 22, wherein the second device is a network device.

24. An algorithm management method, applied to a second device, wherein the method comprises:
obtaining first monitoring information of a first algorithm of a first device and/or second monitoring information of a second algorithm of the first device; and
sending second information to the first device based on the first monitoring information and/or the second monitoring information, wherein the second information is used by the first device to perform algorithm management on the first device.

25. The method according to claim 24, wherein the sending second information to the first device based on the first monitoring information and the second monitoring information specifically comprises:
obtaining third monitoring information based on the first monitoring information and/or the second monitoring information; and
sending the second information comprising the third monitoring information to the first device.

26. The method according to claim 24 or 25, wherein
the first algorithm is an artificial intelligence/machine learning (Artificial Intelligence/Machine Learning, AI/ML) algorithm, and the second algorithm is a conventional algorithm; or
the first algorithm and the second algorithm are different artificial intelligence/machine learning (AI/ML) algorithms.

27. The method according to any one of claims 24 to 26, wherein the second information further comprises one or more of the following: a use case indication, an algorithm indication, or a communication system configuration indication.

28. The method according to any one of claims 24 to 27, wherein the first monitoring information and the second monitoring information are performance monitoring information.

29. The method according to any one of claims 24 to 28, wherein the third monitoring information is performance monitoring information.

30. The method according to any one of claims 24 to 29, wherein that the second information is used by the first device to perform algorithm management on the first device comprises:
the second information is used by the first device to perform algorithm lifecycle management (LCM) on the first device.

31. The method according to any one of claims 24 to 30, wherein the second device comprises a network device.

32. An apparatus, comprising:
a memory, configured to store instructions; and a processor, configured to invoke the instructions in the memory to perform the method according to any one of claims 1 to 8, perform the method according to any one of claims 9 to 15, perform the method according to any one of claims 16 to 23, or perform the method according to any one of claims 24 to 31.
